# EUROPÄISCHE PATENTSCHRIFT

(11) **EP 1 584 949 B1**
(45) Veröffentlichungstag und Bekanntmachung des Hinweises auf die Patenterteilung: **01.07.2009**
(21) Anmeldenummer: 04101426.7
(22) Anmeldetag: 06.04.2004
(51) Int. Cl.: G01T 1/29

(54) **Vorrichtung und System zum Auslesen von in einer stimulierbaren Phosphorschicht gespeicherten Röntgeninformationen**
Method and apparatus for reading-out radiographic information in a photostimulable phosphor panel
Procédé et appareil pour la lecture d'images radiographiques dans un panneau en phosphore photostimulable

(43) Veröffentlichungstag der Anmeldung: 12.10.2005
(73) Patentinhaber: Agfa-Gevaert HealthCare GmbH, 50670 Köln (DE)
(72) Erfinder: Nitsche, Werner, 82008, Unterhaching (DE)

(56) Entgegenhaltungen:
- US-A- 5 072 119
- US-A1- 2002 003 218
- US-A1- 2002 185 620

## Beschreibung

Die Erfindung betrifft eine Vorrichtung sowie ein entsprechendes System zum Auslesen von in einer stimulierbaren Phosphorschicht gespeicherter Röntgeninformation gemäß dem Oberbegriff von Anspruch 1.

Röntgeninformation kann in sogenannten Speicherphosphoren gespeichert werden, wobei die durch ein Objekt, beispielsweise einen Patienten, hindurchtretende Röntgenstrahlung als latentes Bild in einer Phosphorschicht gespeichert wird. Zum Auslesen des latenten Bildes wird die Phosphorschicht mit Stimulationslicht bestrahlt und dabei zur Aussendung von Emissionslicht angeregt. Das Emissionslicht, dessen Intensität dem in der Phosphorschicht gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinisch-diagnostischen Zwecken, bereitgestellt, indem sie an einem entsprechenden Ausgabegerät, wie z. B. einem Monitor oder Drucker, ausgegeben werden.

Als Stimulationslichtquelle werden in solchen Vorrichtungen unter anderem Linienlichtquellen eingesetzt, welche die Phosphorschicht in einem linienförmigen Bereich mit Stimulationslicht bestrahlen. Solche Linienlichtquellen umfassen häufig eine Vielzahl von in einer Reihe angeordneten einzelnen Lichtquellen, deren einzelne Lichtkegel sich auf dem linienförmigen Bereich der Phosphorschicht überlagern.

Während des Betriebs solcher Vorrichtungen kann es jedoch zu zeitlichen Schwankungen der Intensität des von den einzelnen Lichtquellen ausgesandten Stimulationslichts kommen. Die für eine hohe Qualität der aus der Phosphorschicht ausgelesenen Röntgeninformation erforderliche zeitlich konstante und räumlich homogene Intensität des Stimulationslichts im linienförmigen Bereich der Phosphorschicht ist dann nicht mehr gewährleistet.

Aus US 2002/0003218 A1 ist eine Vorrichtung bekannt, bei der das von einer Referenzlichtquelle ausgesandte Referenzlicht von einem Zeilendetektor erfasst und zur Korrektur der ebenfalls mit dem Zeilendetektor erfassten Bildinformation herangezogen wird.

Es ist Aufgabe der Erfindung, eine Vorrichtung der eingangs genannten Art anzugeben, bei welcher eine möglichst hohe zeitliche Konstanz und räumliche Homogenität des auf die Phosphorschicht treffenden Stimulationslichts bei gleichzeitig einfachem Aufbau gewährleistet wird.

Diese Aufgabe wird gemäß Anspruch 1 bzw. Anspruch 12 durch eine Steuerungseinrichtung zur Steuerung der Intensität der einzelnen Lichtquellen unter Heranziehung eines Steuerparameters gelöst, welcher in einer Regelungseinrichtung anhand einer Referenzlichtquelle ermittelt wird. Dabei ist vorgesehen, dass die Regelungseinrichtung die Referenzlichtquelle sowie einen Sensor zur Erfassung von von der Referenzlichtquelle ausgesandtem Licht und zur Erzeugung eines der Intensität des erfassten Lichts entsprechenden Referenzsignals umfasst, aus welchem sie den Steuerparameter ableiten kann. Hierdurch wird auf einfache Weise das zeitliche Verhalten der Referenzlichtquelle erfasst, aus welchem der für die Steuerung der Lichtquellen herangezogene Steuerparameter abgeleitet werden kann.

Die Erfindung basiert auf dem Gedanken, die Intensität der Lichtquellen während des Betriebs der Vorrichtung zu steuern, wobei die Steuerung der Intensität jeder einzelnen Lichtquelle in Abhängigkeit eines Steuerparameters erfolgt. Die Steuerung erfolgt vorzugsweise kontinuierlich, d.h. während des gesamten Betriebs vom Einschalten bis zum Ausschalten der Lichtquellen. Der - vorzugsweise für alle Lichtquellen der Stimulationslichtquelle gleiche - Steuerparameter wird hierbei anhand einer Referenzlichtquelle ermittelt, welche ein den jeweiligen Lichtquellen ähnliches oder mit diesen identisches Betriebsverhalten aufweist. Hierdurch wird eine hohe zeitliche Konstanz sowie räumliche Homogenität des Stimulationslichts im beleuchteten Bereich der Phosphorschicht bei gleichzeitig einfachem Aufbau erreicht.

Es ist bevorzugt, dass die Regelungseinrichtung zur Ableitung des Steuerparameters aus einer Abweichung des Referenzsignals von einem Referenzsollwert ausgebildet ist. Hierzu weist die Regelungseinrichtung vorzugsweise einen Regelkreis auf, welcher die Abweichung des Referenzsignals von dem Referenzsollwert durch eine Veränderung einer an der Referenzlichtquelle anliegenden Referenzlichtquellenspannung kompensieren kann. Durch den Regelkreis wird die Intensität der Referenzlichtquelle automatisch auf einem vorgebbaren Sollwert gehalten, indem die Referenzlichtquellenspannung entsprechend geregelt, d. h. erhöht bzw. vermindert, wird. Bei gleichem oder ähnlichem zeitlichen Verhalten der Referenzlichtquelle und der einzelnen Lichtquellen kann der für die Steuerung der Intensität der einzelnen Lichtquellen herangezogene Steuerparameter dann einfach aus der Referenzlichtquellenspannung abgeleitet werden.

In einer weiteren bevorzugten Ausführungsform ist vorgesehen, dass die Regelungseinrichtung einen Subtrahierer zur Bildung einer Differenz zwischen der Referenzlichtquellenspannung und dem Referenzsollwert aufweist und der Steuerparameter dieser gebildeten Differenz entspricht. Bei dieser Ausgestaltung nimmt der Steuerparameter einen von Null verschiedenen Wert an, wenn die Referenzlichtquellenspannung, bei welcher die Referenzlichtquelle tatsächlich betrieben wird, von der dem Referenzsollwert entsprechenden Spannung, mit welcher die Referenzlichtquelle zur Erreichung einer gewünschten Intensität betrieben werden soll, abweicht. Vorzugsweise entspricht dem Referenzsollwert eine Referenzeingangsspannung, welche an einem Eingang des Regelkreises anliegt.

In einer weiteren bevorzugten Ausführungsform ist vorgesehen, dass die Steuerungseinrichtung für jede der Lichtquellen jeweils eine Steuereinheit umfasst, welche eine an der jeweiligen Lichtquelle anliegende Lichtquellenspannung in Abhängigkeit von dem Steuerparameter einstellen kann. Hierdurch wird erreicht, dass die jeweils an einer Lichtquelle anliegende Lichtquellenspannung für jede Lichtquelle individuell eingestellt werden kann. Die Intensität der einzelnen Lichtquellen ist damit jeweils einzeln steuerbar.

Hierbei ist bevorzugt, dass die Steuereinheit einen Addierer zur Bildung der Summe aus dem Steuerparameter und einer Lichtquelleneingangsspannung der jeweiligen Lichtquelle aufweist, wobei die an der jeweiligen Lichtquelle anliegende Lichtquellenspannung dieser Summe entspricht. Hierdurch wird die Einstellung der Lichtquellenspannung jeder einzelnen Lichtquelle in Abhängigkeit vom Steuerparameter auf einfache Weise realisiert.

Vorzugsweise sind die Referenzlichtquelle und die einzelnen Lichtquellen jeweils gleichen Bautyps. Hierdurch wird sichergestellt, dass die Referenzlichtquelle, anhand welcher der Steuerparameter ermittelt wird, ein zeitliches Verhalten aufweist, welches mit demjenigen der einzelnen Lichtquellen im Wesentlichen identisch ist. Etwaige Änderungen der Intensität der Lichtquellen während des Betriebs werden auf diese Weise mit besonders hoher Zuverlässigkeit kompensiert und damit vermieden.

Außerdem ist es vorteilhaft, die Referenzlichtquelle mit den Lichtquellen thermisch zu koppeln. Da Intensitätsschwankungen der einzelnen Lichtquellen in hohem Maße durch thermische Effekte bedingt sind, werden Intensitätsschwankungen der einzelnen Lichtquellen dadurch mit besonders hoher Zuverlässigkeit verhindert.

In einer weiteren Ausgestaltung der Erfindung ist ein Speicher vorgesehen, in welchem der Steuerparameter gespeichert werden kann und auf welchen die Steuerungseinrichtung zugreifen kann. Die Regelungseinrichtung kann bei dieser Ausführung eine separate Einheit bilden und unabhängig von der erfindungsgemäßen Vorrichtung den Steuerparameter ermitteln, welcher im Speicher gespeichert werden kann. Die Steuerungseinrichtung kann dann beim Betrieb der erfindungsgemäßen Vorrichtung auf den Speicher zugreifen und den erforderlichen Steuerparameter erhalten. Hierdurch kann auf den Einbau einer entsprechenden Regelungseinrichtung in die erfindungsgemäße Vorrichtung verzichtet werden.

Insbesondere bei der zuletzt genannten Ausführung kann außerdem vorgesehen sein, dass die Regelungseinrichtung zur Ermittlung des Steuerparameters in Abhängigkeit von der Zeit nach einem Einschalten der Referenzlichtquelle und/oder von der Umgebungstemperatur in der Umgebung der Referenzlichtquelle ausgebildet ist. Der von der Zeit und/oder Umgebungstemperatur abhängige Steuerparameter kann bei dieser Ausführung in der separaten Regelungseinrichtung ermittelt und im Speicher abgelegt werden. Beim Betrieb der Vorrichtung kann die Steuereinrichtung auf den Speicher, der vorzugsweise in der Vorrichtung integriert ist, zugreifen und dabei denjenigen Steuerparameter erhalten, welcher der jeweiligen Zeit nach einem Einschalten der Lichtquellen und/oder der Umgebungstemperatur in der Umgebung der Lichtquellen beim Betrieb der Lichtquellen entspricht. In der Vorrichtung sind hierbei entsprechende Messeinrichtungen zur Messung der Zeit bzw. der Umgebungstemperatur vorgesehen.

Das System umfasst neben der vorstehend beschriebenen Vorrichtung und deren Ausgestaltungen auch die entsprechende Regelungseinrichtung zur Ermittlung des Steuerparameters anhand von Licht, welches von der Referenzlichtquelle ausgesandt wird.

Das System einschließlich Steuerungseinrichtung und Regelungseinrichtung kann dabei vollständig in einem Lesegerät zum Auslesen von Phosphorschichten integriert sein. Der Steuerparameter wird hierbei vorzugsweise in Echtzeit ermittelt, d.h. während des Betriebs der einzelnen Lichtquellen.

In einer alternativen Ausgestaltung des Systems kann die Steuerungseinrichtung im Lesegerät integriert sein, während die Regelungseinrichtung außerhalb des Lesegerätes angeordnet ist. Bei dieser Ausgestaltung wird der Steuerparameter insbesondere separat vom Betrieb der einzelnen Lichtquellen ermittelt und dann in einem Speicher abgelegt. Die Ermittlung des Steuerparameters erfolgt vorzugsweise in Abhängigkeit von der Zeit nach einem Einschalten der Referenzlichtquelle und/oder von der Umgebungstemperatur in der Umgebung der Referenzlichtquelle in der oben bereits beschriebenen Weise.

Die Erfindung wird nachfolgend anhand von Figuren näher erläutert.

Es zeigen:
- Fig. 1: eine Seitenansicht der erfindungsgemäßen Vorrichtung;
- Fig. 2: eine Vorderansicht eines ersten Ausführungsbeispiels der erfindungsgemäßen Vorrichtung;
- Fig. 3: einen Schaltplan zur erfindungsgemäßen Steuerung der Intensität der einzelnen Lichtquellen; und
- Fig. 4: eine Vorderansicht eines zweiten Ausführungsbeispiels der erfindungsgemäßen Vorrichtung.

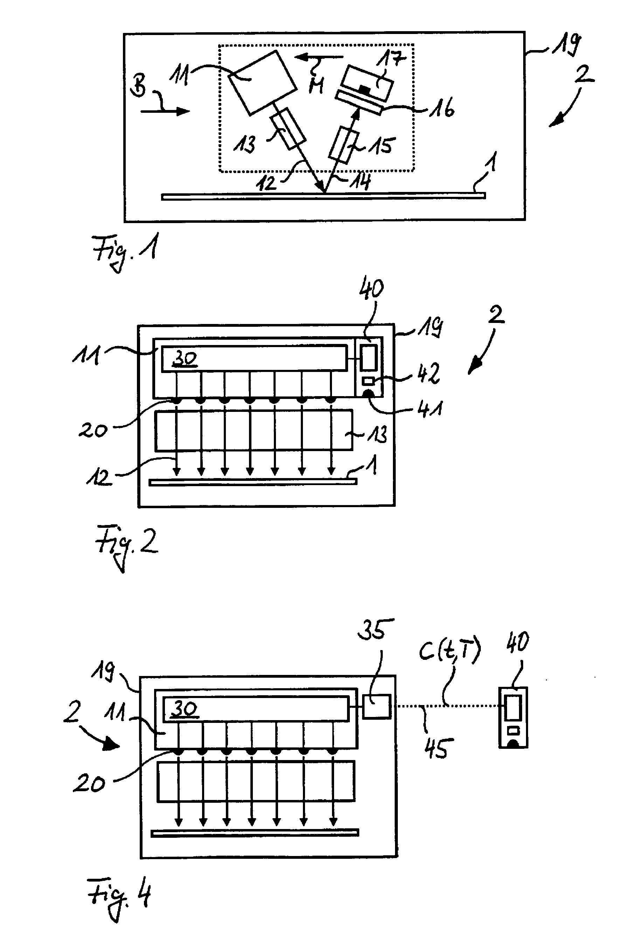

Fig. 1 zeigt eine Seitenansicht der erfindungsgemäßen Vorrichtung zum Auslesen der in einer Phosphorschicht 1 gespeicherten Röntgeninformation. Die Vorrichtung weist eine Linienlichtquelle 11 zur Erzeugung von Stimulationslicht 12 auf, welches mittels einer ersten optischen Einrichtung 13 auf die Phosphorschicht 1 fokussiert wird, wobei ein senkrecht zur Figurenebene verlaufender linienförmiger Bereich der Phosphorschicht mit Stimulationslicht 12 bestrahlt wird. In diesem Bereich wird die Phosphorschicht 1 zur Aussendung von Emissionslicht 14 angeregt, welches von einem Detektor 17, welcher als ein ebenfalls senkrecht zur Figurenebene verlaufender zeilenförmiger Detektor ausgebildet ist, erfasst. Zur Fokussierung des Emissionslichts 14 auf den Detektor 17 ist eine entsprechende zweite optische Einrichtung 15 vorgesehen. Eine Filtereinrichtung 16 ist für Emissionslicht 14 im Wesentlichen durchlässig und für Stimulationslicht 12 im Wesentlichen undurchlässig. Hierdurch wird gewährleistet, dass das von dem Detektor 17 zu erfassende Emissionslicht 14 nicht durch an der Phosphorschicht 1 reflektierte oder gestreute Anteile des Stimulationslichts 12 verfälscht wird.

Die genannten Komponenten bilden zusammen einen Lesekopf 18, welcher zum Auslesen der in der Phosphorschicht 1 gespeicherten Röntgeninformation in Transportrichtung M über die Phosphorschicht bewegt wird, wobei die in der Phosphorschicht 1 gespeicherte Röntgeninformation sukzessive ausgelesen wird.

Die erfindungsgemäße Vorrichtung ist in einem Gehäuse 19 eines entsprechenden Lesegerätes 2 zum Auslesen von Phosphorschichten integriert. Das Lesegerät 2 kann hierbei derart ausgestaltet sein, dass die jeweils auszulesende Phosphorschicht 1 vor dem Auslesen in das Lesegerät 2 eingeführt wird und nach dem Auslesen wieder aus dem Lesegerät 2 entnommen wird. Das Gehäuse 19 eines solchen Lesegerätes 2 weist hierfür eine entsprechende Öffnung (nicht dargestellt) auf, durch welche eine Kassette mit der darin befindlichen Phosphorschicht 1 zugeführt werden kann. Alternativ kann das Lesegerät 2 als sogenan n-tes kassettenloses System ausgebildet sein, bei welchem die Phosphorschicht 1 fest im Gehäuse 19 integriert ist. Ein solches System kann bei der Aufnahme von Röntgenbildern wie eine herkömmliche Röntgenkassette verwendet werden, hat gegenüber einer solchen jedoch den Vorteil, dass diese nicht einem speziellen Lesegerät zugeführt werden muss, sondern den hierfür erforderlichen Lesekopf 18 bereits als integralen Bestandteil aufweist. Die mit einem solchen kassettenlosen System bei einer Röntgenaufnahme in der Phosphorschicht 1 gespeicherte Information kann dann ohne weiteres Kassettenhandling oder dergleichen direkt ausgelesen werden.

Fig. 2 zeigt eine Vorderansicht eines ersten Ausführungsbeispiels der in einem Lesegerät 2 integrierten erfindungsgemäßen Vorrichtung. Die dargestellte Vorderansicht verläuft hierbei in Blickrichtung B der in Fig. 1 gezeigten Ansicht. Wie in dieser Darstellung zu erkennen ist, weist die Linienlichtquelle 11 mehrere in einer Reihe angeordnete Lichtquellen 20 auf, die jeweils Stimulationslicht 12 emittieren, welches durch die erste optische Einrichtung 13 auf die Phosphorschicht 1 fokussiert wird. Im dargestellten Beispiel sind insgesamt sieben Lichtquellen 20 zu sehen. In vielen Anwendungsfällen ist die Anzahl der Lichtquellen meist deutlich höher und liegt vorzugsweise zwischen etwa 30 und 50 Lichtquellen 20 je Linienlichtquelle 11. Bei den einzelnen Lichtquellen 20 handelt es sich vorzugsweise um Laserdioden (LDs) oder um sehr lichtstarke Leuchtdioden (LEDs).

Zur Ansteuerung der einzelnen Lichtquellen 20 ist eine Steuerungseinrichtung 30 vorgesehen, welche die jeweiligen Intensitäten der Lichtquellen 20 einzeln steuern kann. Erfindungsgemäß erfolgt diese Ansteuerung unter Heranziehung eines Steuerparameters, der in einer Regelungseinrichtung 40 ermittelt wird.

Die Regelungseinrichtung 40 weist hierzu eine Referenzlichtquelle 41 sowie einen Sensor 42 auf, welcher das von der Referenzlichtquelle 41 abgegebene Licht erfasst und in ein entsprechendes Referenzsignal umwandelt. Aus dem Referenzsignal wird in der Regelungseinrichtung 40 der Steuerparameter abgeleitet, der dann in der Steuerungseinrichtung 30 zur Einstellung der Intensitäten der einzelnen Lichtquellen 20 herangezogen werden kann.

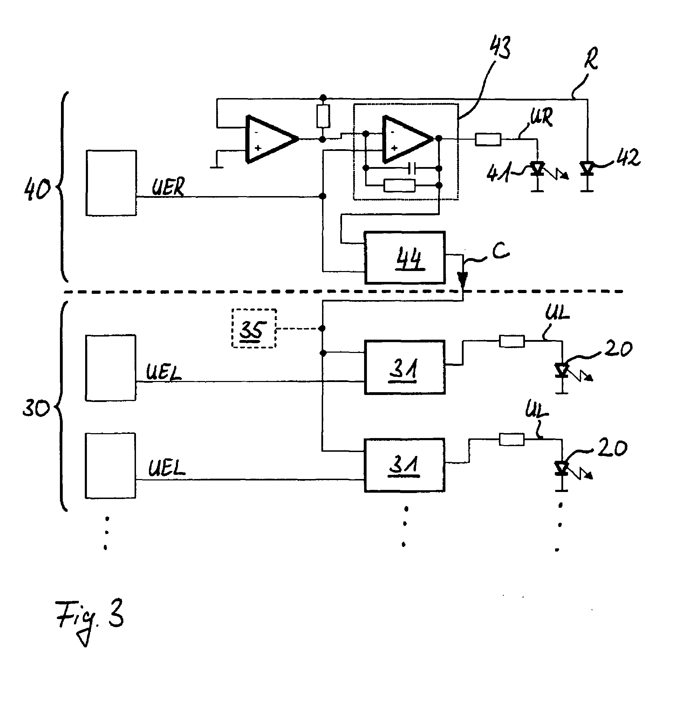

Fig. 3 zeigt einen Schaltplan zur erfindungsgemäßen Steuerung der Intensität der einzelnen Lichtquellen 20. Die einzelnen Komponenten der gezeigten Schaltung sind im Wesentlichen in zwei Hautbestandteilen zusammengefasst, nämlich in der Steuerungseinrichtung 30 einerseits und der Regelungseinrichtung 40 andererseits.

Die Referenzlichtquelle 41 wird mit einer Referenzlichtquellenspannung UR betrieben und sendet Licht aus, welches von dem Sensor 42 erfasst wird und in ein der Intensität des Lichts entsprechendes Referenzsignal R umgewandelt wird. Das Referenzsignal R wird mittels einer Reglerschaltung 43 mit einer Referenzeingangsspannung UER, welche dem Referenzsollwert entspricht, verglichen. Bei einer Abweichung des Referenzsignals R vom Referenzsollwert UER wird mittels der Reglerschaltung 43 die Referenzlichtquellenspannung UR und damit die Intensität des von der Referenzlichtquelle abgegebenen Lichts derart verändert, dass diese Abweichung kompensiert wird. Ist beispielsweise auf Grund von zeitlichen Intensitätsschwankungen die momentane Intensität des von der Referenzlichtquelle 41 abgegebenen Lichts höher als dies dem Referenzsollwert UER entspricht, so wird in der Reglerschaltung 43 die Referenzlichtquellenspannung UR soweit vermindert, bis das der Intensität entsprechende Referenzsignal R mit dem Referenzsollwert UER identisch ist.

Die in diesem Regelkreis erhaltene Referenzlichtquellenspannung UR wird zusammen mit dem Referenzsollwert UER einem Subtrahierer 44 zugeführt, welcher die Differenz aus beiden Spannungen bildet. Diese Differenz dient dann als Steuerparameter C.

Der auf diese Weise erhaltene Steuerparameter C wird der Steuerungseinrichtung 30 zugeführt. Diese weist Steuereinheiten 31 auf, wobei für jede der Lichtquellen 20 eine einzelne Steuereinheit 31 vorgesehen ist. In dem hier dargestellten Beispiel sind die Steuereinheiten 31 jeweils als Addierer ausgeführt, in welchem der Steuerparameter C mit einer Lichtquelleneingangsspannung UEL zu einer Lichtquellenspannung UL, welche an der jeweiligen Lichtquelle 20 anliegt, addiert wird.

Die einzelnen Lichtquelleneingangsspannungen UEL sind im Allgemeinen unterschiedlich, um geringfügige Intensitätsunterschiede, die selbst bei Lichtquellen 20 gleichen Bautyps auftreten können, zu berücksichtigen. Diese im Allgemeinen voneinander abweichenden Lichtquelleneingangsspannungen UEL werden vorzugsweise bereits bei der Herstellung der erfindungsgemäßen Vorrichtung entsprechend eingestellt. Da sich diese sogenannte Typenstreuung der Intensität einzelner Lichtquellen 20 gleichen Bautyps beim Betrieb der Lichtquellen 20 aber meist nicht stark ändert, ist eine Änderung der Lichtquelleneingangsspannungen UEL während des Betriebs in der Regel nicht erforderlich.

Dem gegenüber werden bei der vorliegenden Schaltung zeitliche Intensitätsschwankungen, beispielsweise aufgrund temperaturabhängiger Effekte, während des Betriebs der einzelnen Lichtquellen 20 durch Heranziehung des Steuerparameters C und entsprechende Anpassung der jeweiligen Lichtquellenspannung UL kompensiert. Der Erfindung liegt hierbei die überraschende Erkenntnis zu Grunde, dass das zeitliche Intensitätsverhalten der Lichtquellen 20 gleichen Bautyps während des Betriebs im Wesentlichen identisch ist. Hierdurch führt die erfindungsgemäße Ansteuerung der einzelnen Lichtquellen 20 mit nur einem Steuerparameter C zu einer äußerst zuverlässigen Kompensation von Intensitätsschwankungen bei gleichzeitig einfachem Aufbau.

Bei der beschriebenen Steuerung der Intensität der einzelnen Lichtquellen 20 in der Steuereinrichtung 30 unter Heranziehung des in der Regelungseinrichtung 40 ermittelten Steuerparameters C handelt es sich um eine Verwirklichung des sogenannten Master-Slave-Prinzips.

In einer Variante der in Fig. 3 gezeigten Schaltung kann der in der Regelungseinrichtung 40 ermittelte Steuerparameter C in einem Speicher 35 gespeichert werden. Eine direkte Verbindung zwischen der Steuereinrichtung 30 und der Regelungseinrichtung 40 ist dann nicht mehr erforderlich. Vielmehr kann bei dieser Ausführung der Steuerparameter C, vorzugsweise in Abhängigkeit von der Zeit und der Umgebungstemperatur der Referenzlichtquelle 41 ermittelt und im Speicher 35 abgelegt werden. Beim Betrieb der erfindungsgemäßen Vorrichtung greift die Steuerungseinrichtung 30 dann auf den, von der Zeit und der Umgebungstemperatur abhängigen, Steuerparameter C im Speicher 35 zu und leitet daraus die einzelnen Lichtquellenspannungen UL der Lichtquellen 20 ab.

Die dargestellte Schaltung umfasst neben den oben beschriebenen Komponenten weitere elektronische Bauteile, wie z. B. Widerstände und einen Kondensator, welche bei unterschiedlichen Varianten der erfindungsgemäßen Schaltung entfallen oder unterschiedlich dimensioniert sein können. Dieses sowie das Vorsehen weiterer, nicht dargestellter Bauteile liegt im Rahmen üblichen fachmännischen Wissens und wird daher nicht näher beschrieben.

Fig. 4 zeigt eine Vorderansicht eines zweites Ausführungsbeispiels der erfindungsgemäßen Vorrichtung. Dieses Ausführungsbeispiel unterscheidet sich von dem in Fig. 2 gezeigten dadurch, dass die Regelungseinrichtung 40 nicht Bestandteil des Lesegerätes 2 ist, sondern von diesem getrennt und unabhängig betrieben werden kann.

Bei diesem Ausführungsbeispiel wird in der Regelungseinrichtung 40 der Steuerungsparameter C wie bei der in Fig. 2 gezeigten Regelungseinrichtung ermittelt. Die Ausführungen zu den Figuren 2 und 3 gelten entsprechend. Im Unterschied hierzu wird bei dem in Fig. 4 gezeigten Beispiel der Steuerparameter C zu unterschiedlichen Zeitpunkten t sowie bei unterschiedlichen Umgebungstemperaturen T ermittelt und als von der Zeit t und der Umgebungstemperatur T abhängiges Datenfeld C(t, T), beispielsweise als eine sogenannte Lookup-Tabelle, in einem Speicher 35 abgelegt. Im gezeigten Beispiel ist der Speicher 35 im Lesegerät 2 integriert und mit einer Datenleitung 45 mit der Regelungseinrichtung 40 verbu n-den. Alternativ kann der Speicher 35 aber auch außerhalb des Gehäuses 19 des Lesegerätes 2 liegen, beispielsweise in einem zentralen Fileserver, auf welchen mehrere Lesegeräte zugreifen können.

Nachdem der Steuerparameter für einen erforderlichen bzw. gewünschten Zeit-und Temperaturbereich ermittelt und im Speicher 35 abgelegt worden ist, kann die Datenleitung 45 zwischen Regelungseinrichtung 40 und Speicher 35 getrennt werden.

Die Umgebungstemperaturen T, bei welchen der Steuerparameter C ermittelt wird, liegen typischerweise in einem Bereich zwischen etwa 10 und 60 Grad Celsius (°C), insbesondere zwischen 20 und 40 °C. Der Steuerparameter C wird hierbei vorzugsweise in Temperaturschritten ΔT von etwa 1 bis 5 °C ermittelt. Die Zeitdauer, innerhalb welcher der Steuerparameter C abhängig von der Zeit t ermittelt wird, liegt typischerweise zwischen etwa 0,5 und 100 Millisekunden (ms), insbesondere im Bereich von 1 bis 5 ms. Der Steuerparameter C wird dabei vorzugsweise in Zeitintervallen Δt zwischen 50 und 200 Mikrosekunden (µs) ermittelt.

Die Steuerungseinrichtung 30 weist in diesem Beispiel geeignete Messeinrichtungen (nicht dargestellt) zur Erfassung der jeweiligen Zeit und/oder Umgebungstemperatur t bzw. T während es Betriebs der Lichtquellen 20 auf und greift auf den diesen beiden Parametern entsprechenden Steuerparameter C(t, T) im Speicher 35 zu. Der hierbei erhaltene Steuerparameter C wird schließlich bei der erfindungsgemäßen Steuerung der Intensität der einzelnen Lichtquellen 20 herangezogen.

Die Linienlichtquelle 11 der erfindungsgemäßen Vorrichtung gemäß den Figuren 1, 2 und 4 wird vorzugsweise gepulst betrieben, wobei die einzelnen Lichtquellen 20 abwechselnd, vorzugsweise periodisch, ein- und ausgeschaltet werden. Durch die damit verbundene zeitlich schwankende Wärmeentwicklung ändert sich auch die Umgebungstemperatur und damit das zeitliche Intensitätsverhalten der Lichtquellen 20 entsprechend. Durch die erfindungsgemäße thermische Kopplung der Referenzlichtquelle 41 mit den Lichtquellen 20 in dem in Fig. 2 gezeigten Beispiel oder die zeit- und temperaturabhängige Ermittlung und Speicherung des Steuerparameters C gemäß dem in Fig. 4 gezeigten Beispiel werden zeitliche Intensitätsschwankungen der Lichtquellen 20, insbesondere aufgrund von Temperaturschwankungen während des Betriebs der Linienlichtquelle 11, mit hoher Zuverlässigkeit und bei gleichzeitig einfachem Aufbau vermieden.

## Patentansprüche

1. Vorrichtung zum Auslesen von in einer stimulierbaren Phosphorschicht (1) gespeicherter Röntgeninformation mit
- mehreren Lichtquellen (20) zur Aussendung von Stimulationslicht (12), welches die Phosphorschicht (1) zur Aussendung von Emissionslicht (14) anregen kann,
- einem Detektor (17) zur Erfassung von von der Phosphorschicht (1) ausgesandtem Emissionslicht (14) und
- einer Steuerungseinrichtung (30) zur Steuerung der Intensität der Lichtquellen (20) unter Heranziehung eines Steuerparameters (C), welcher in einer Regelungseinrichtung (40) anhand einer Referenzlichtquelle (41) ermittelt wird,
**dadurch gekennzeichnet, dass**
die Regelungseinrichtung (40)
- die Referenzlichtquelle (41) und
- einen Sensor (42) zur Erfassung von von der Referenzlichtquelle (41) ausgesandtem Licht und zur Erzeugung eines der Intensität des erfassten Lichts entsprechenden Referenzsignals (R)
umfasst und zur Ableitung des Steuerparameters (C) aus dem Referenzsignal (R) ausgebildet ist.

2. Vorrichtung nach Anspruch 1, **dadurch gekennzeichnet, dass** die Regelungseinrichtung (40) zur Ableitung des Steuerparameters (C) aus einer Abweichung des Referenzsignals (R) von einem Referenzsollwert (UER) ausgebildet ist.

3. Vorrichtung nach Anspruch 2, **dadurch gekennzeichnet, dass** die Regelungseinrichtung (40) einen Regelkreis (43) umfasst, welcher die Abweichung des Referenzsignals (R) von dem Referenzsollwert (UER) durch eine Veränderung einer Referenzlichtquellenspannung (UR), welche an der Referenzlichtquelle (41) anliegt, kompensieren kann.

4. Vorrichtung nach Anspruch 3, **dadurch gekennzeichnet, dass** die Regelungseinrichtung (40) zur Ableitung des Steuerparameters (C) aus der Referenzlichtquellenspannung (UR) ausgebildet ist.

5. Vorrichtung nach Anspruch 3 oder 4, **dadurch gekennzeichnet, dass** die Regelungseinrichtung (40) einen Subtrahierer (44) zur Bildung einer Differenz zwischen der Referenzlichtquellenspannung (UR) und dem Referenzsollwert (UER) aufweist und der Steuerparameter (C) der gebildeten Differenz entspricht.

6. Vorrichtung nach einem der vorangehenden Ansprüche, **dadurch gekennzeichnet, dass** die Steuerungseinrichtung (30) für jede der Lichtquellen (20) jeweils eine Steuereinheit (31) umfasst, welche eine an der jeweiligen Lichtquelle (20) anliegende Lichtquellenspannung (UL) in Abhängigkeit von dem Steuerparameter (C) einstellen kann.

7. Vorrichtung nach Anspruch 6, **dadurch gekennzeichnet, dass** die Steuereinheit (31) einen Addierer zur Bildung der Summe aus dem Steuerparameter (C) und einer Lichtquelleneingangsspannung (UEL) der jeweiligen Lichtquelle (20) aufweist und die an der jeweiligen Lichtquelle (20) anliegende Lichtquellenspannung (UL) dieser Summe entspricht.

8. Vorrichtung nach einem der vorangehenden Ansprüche, **dadurch gekennzeichnet, dass** die Referenzlichtquelle (41) und die Lichtquellen (20) gleichen Bautyps sind.

9. Vorrichtung nach einem der vorangehenden Ansprüche, **dadurch gekennzeichnet, dass** die Referenzlichtquelle (41) mit den Lichtquellen (20) thermisch gekoppelt ist.

10. Vorrichtung nach einem der vorangehenden Ansprüche, **dadurch gekennzeichnet, dass** ein Speicher (35) vorgesehen ist, in welchem der Steuerparameter (C) gespeichert werden kann und auf welchen die Steuerungseinrichtung (30) zugreifen kann.

11. Vorrichtung nach einem der vorangehenden Ansprüche, **dadurch gekennzeichnet, dass** die Regelungseinrichtung (40) zur Ermittlung des Steuerparameters (C) in Abhängigkeit von der Zeit (t) und/oder der Umgebungstemperatur (T) ausgebildet ist.

## Claims

1. An apparatus for reading out X-ray information stored in a stimulatable phosphor layer (1) having
- a number of light sources (20) for emitting stimulation light (12), which can stimulate the phosphor layer (1) to emit emission light (14),
- a detector (17) for detecting emission light (14) emitted by the phosphor layer (1), and
- a control device (30) for controlling the intensity of the light sources (20) using a control parameter (C) which is determined in a regulation device (40) by means of a reference light source (41),
**characterised in that**
the regulation device (40) comprises
- the reference light source (41) and
- a sensor (42) for detecting light emitted by the reference light source (41) and for generating a reference signal (R) corresponding to the intensity of the light detected
and is designed to deduce the control parameter (C) from the reference signal (R).

2. The apparatus according to Claim 1, **characterised in that** the regulation device (40) is designed to deduce the control parameter (C) from a deviation of the reference signal (R) from a desired reference value (UER).

3. The apparatus according to Claim 2, **characterised in that** the regulation device (40) comprises a control circuit (43) which can compensate the deviation of the reference signal (R) from the desired reference value (UER) by means of a change to a reference light source voltage (UR) which is applied to the reference light source (41).

4. The apparatus according to Claim 3, **characterised in that** the regulation device (40) is designed to deduce the control parameter (C) from the reference light source voltage (UR).

5. The apparatus according to Claim 3 or 4, **characterised in that** the regulation device (40) has a subtractor (44) for forming a difference between the reference light source voltage (UR) and the desired reference value (UER) and that the control parameter (C) corresponds to the difference formed.

6. The apparatus according to any of the preceding claims, **characterised in that** the control device (30) comprises a respective control unit (31) for each of the light sources (20) which can set a light source voltage (UL) applied to the respective light source (20) dependently upon the control parameter (C).

7. The apparatus according to Claim 6, **characterised in that** the control unit (31) has an adder for forming the sum of the control parameter (C) and a light source input voltage (UEL) of the light source and that the light source voltage (UL) applied to the respective light source (20) corresponds to this sum.

8. The apparatus according to any of the preceding claims, **characterised in that** the reference light source (41) and the light sources (20) are of the same design type.

9. The apparatus according to any of the preceding claims, **characterised in that** the reference light source (41) is thermally coupled to the light sources (20).

10. The apparatus according to any of the preceding claims, **characterised in that** a memory (35) is provided in which the control parameter (C) can be stored and to which the control device (30) can gain access.

11. The apparatus according to any of the preceding claims, **characterised in that** the regulation device (40) is designed to establish the control parameter (C) dependently upon the time (t) and/or the ambient temperature (T).

## Revendications

1. Dispositif de lecture d'informations radiographiques stockées sur une couche de phosphore stimulable (1), comportant
- plusieurs sources lumineuses (20) destinées à émettre de la lumière de stimulation (12) susceptible de stimuler la couche de phosphore (1) en vue de l'émission de lumière d'émission (14),
- un détecteur (17) destiné à capter la lumière d'émission (14) émise par la couche de phosphore (1), et
- un dispositif de commande (30) destiné à commander l'intensité des sources lumineuses (20) en utilisant un paramètre de commande (C) qui est déterminé dans une unité de régulation (40) à partir d'une source lumineuse de référence (41),
**caractérisé en ce que**
l'unité de régulation (40) comprend
- la source lumineuse de référence (41) et
- un capteur (42) destiné à capter la lumière émise par la source lumineuse de référence (41) et destiné à produire un signal de référence (R) correspondant à l'intensité de la lumière captée, et **en ce qu'**elle est conçue pour déduire le paramètre de commande (C) à partir du signal de référence (R).

2. Dispositif selon la revendication 1, **caractérisé en ce que** l'unité de régulation (40) est conçue pour déduire le paramètre de commande (C) à partir d'une déviation du signal de référence (R) par rapport à une valeur de consigne de référence (UER).

3. Dispositif selon la revendication 2, **caractérisé en ce que** l'unité de régulation (40) comprend un circuit de régulation (43) qui compense la déviation du signal de référence (R) par rapport à la valeur de consigne de référence (UER) en modifiant une tension de source lumineuse de référence (UR) qui est appliquée à la source lumineuse de référence (41).

4. Dispositif selon la revendication 3, **caractérisé en ce que** l'unité de régulation (40) est conçue pour déduire le paramètre de commande (C) à partir de la tension de source lumineuse de référence (UR).

5. Dispositif selon la revendication 3 ou 4, **caractérisé en ce que** l'unité de régulation (40) présente un soustracteur (44) destiné à produire une différence entre la tension de source lumineuse de référence (UR) et la valeur de consigne de référence (UER) et **en ce que** le paramètre de commande (C) correspond à la différence produite.

6. Dispositif selon l'une des revendications précédentes, **caractérisé en ce que** le dispositif de commande (30) comprend, pour chacune des sources lumineuses (20), une unité de commande (31) respective qui est susceptible de régler une tension de source lumineuse (UL), appliquée à la source lumineuse (20) respective, en fonction du paramètre de commande (C).

7. Dispositif selon la revendication 6, **caractérisé en ce que** l'unité de commande (31) présente un additionneur destiné à produire la somme entre le paramètre de commande (C) et une tension d'entrée de source lumineuse (UEL) de la source lumineuse (20) respective et **en ce que** la tension de source lumineuse (UL) appliquée à la source lumineuse (20) respective correspond à cette somme.

8. Dispositif selon l'une des revendications précédentes, **caractérisé en ce que** la source lumineuse de référence (41) et les sources lumineuses (20) sont de même type de construction.

9. Dispositif selon l'une des revendications précédentes, **caractérisé en ce que** la source lumineuse de référence (41) est couplée thermiquement aux sources lumineuses (20).

10. Dispositif selon l'une des revendications précédentes, **caractérisé en ce qu'**il est prévu une mémoire (35) dans laquelle le paramètre de commande (C) peut être stocké et à laquelle le dispositif de commande (30) peut accéder.

11. Dispositif selon l'une des revendications précédentes, **caractérisé en ce que** l'unité de régulation (40) est conçue pour déterminer le paramètre de commande (C) en fonction du temps (t) et/ou de la température ambiante (T).
